# EUROPEAN PATENT APPLICATION

(11) **EP 4 329 014 A1**
(43) Date of publication of application: **28.02.2024**
(21) Application number: 22927593.8
(22) Date of filing: 09.06.2022
(51) Int. Cl.: H01M 4/62

(54) **SECONDARY BATTERY, BATTERY MODULE COMPRISING SECONDARY BATTERY, BATTERY PACK, AND ELECTRIC DEVICE**

(71) Applicant: Contemporary Amperex Technology Co., Limited, Ningde City, Fujian PRC 352100 (CN)
(72) Inventor: DONG, Xiaobin, Ningde City, Fujian 352100 (CN); WANG, Jiazheng, Ningde City, Fujian 352100 (CN); YAN, Qingwei, Ningde City, Fujian 352100 (CN)
(74) Representative: Gong, Jinping
(86) International application number: PCT/CN2022/097944
(87) International publication number: WO 2023/236152

(57) **Abstract**

This application discloses a secondary battery and a battery module, battery pack, and electric apparatus containing such secondary battery. The secondary battery includes: a positive electrode plate including a positive electrode film layer; a separator; and a negative electrode plate. The negative electrode plate includes: a first negative electrode film layer, the first negative electrode film layer being provided opposite the positive electrode film layer with the separator therebetween; and a second negative electrode film layer, the second negative electrode film layer including a negative electrode film layer not provided opposite the positive electrode film layer, and the second negative electrode film layer including a central region and a peripheral region surrounding the central region, where a lithium source used for supplementing lithium to the first negative electrode film layer is stored in at least a portion of the peripheral region of the second negative electrode film layer.

## Description

### TECHNICAL FIELD

This application relates to the field of secondary battery technologies and specifically to a secondary battery and a battery module, battery pack, and electric apparatus containing such secondary battery.

### BACKGROUND

Secondary batteries are charged and discharged through repeated intercalation and deintercalation of active ions between a positive electrode and a negative electrode, featuring outstanding features such as high energy density, long cycle life, no pollution, and no memory effect. Therefore, as clean energy, secondary batteries have been gradually popularized from electronic products to large-scale apparatuses such as electric vehicles to adapt to sustainable development strategies of environment and energy. Thus, higher requirements are also imposed on the energy density of secondary batteries.

However, during the first charge of a secondary battery, a SEI (solid electrolyte interface, solid electrolyte interface) film is inevitably formed on the surface of a negative electrode active material, resulting in irreversible consumption of active ions, which leads to difficulty in compensation for irreversible capacity loss of the secondary battery, and brings challenges to increase in energy density of the secondary battery.

### SUMMARY

This application is intended to provide a secondary battery and a battery module, battery pack, and electric apparatus containing such secondary battery, aiming to make the secondary battery have high energy density and good cycling performance and storage performance.

To achieve the foregoing invention objective, a first aspect of this application provides a secondary battery including a positive electrode plate on which a positive electrode film layer is provided, a separator, and a negative electrode plate, where the negative electrode plate includes: a first negative electrode film layer, the first negative electrode film layer being provided opposite the positive electrode film layer with the separator therebetween; and a second negative electrode film layer, the second negative electrode film layer including a negative electrode film layer not provided opposite the positive electrode film layer, and the second negative electrode film layer including a central region and a peripheral region surrounding the central region, where a lithium source used for supplementing lithium to the first negative electrode film layer is stored in at least a portion of the peripheral region of the second negative electrode film layer.

In the secondary battery of this application, the lithium source used for supplementing lithium to the first negative electrode film layer is stored in the peripheral region of the second negative electrode film layer of the negative electrode plate, and the region with the lithium source stored can have a low potential. Thus, during charge of a lithium-ion secondary battery, after Li⁺ deintercalated from a positive electrode are intercalated into the first negative electrode film layer, a small potential difference can be kept between the first negative electrode film layer and the second negative electrode film layer despite of the potential decrease of the first negative electrode film layer, so that diffusion and intercalation of Li⁺ into the second negative electrode film layer can be prevented. During discharge of the lithium-ion secondary battery, the potential of the first negative electrode film layer gradually increases, and when the potential of the first negative electrode film layer is far higher than that of the second negative electrode film layer, Li⁺ is produced by the lithium source under driving of the potential difference between the first negative electrode film layer and the second negative electrode film layer, and the Li⁺ ions diffuse slowly to the first negative electrode film layer. Thus, active lithium lost during charge and discharge cycles of the lithium-ion secondary battery can be compensated for, thereby significantly improving the first-cycle coulombic efficiency, cycling performance, and storage performance of the secondary battery. Further, the lithium source of this application is stored in the peripheral region of the second negative electrode film layer. Compared with the central region, the peripheral region has a shorter distance to the first negative electrode film layer. When the lithium source produces Li⁺ under the driving of the potential difference, Li⁺ can have a shorter diffusion path, which can avoid loss of Li⁺ during diffusion, thus significantly improving lithium supplementing efficiency and utilization of the lithium source.

In any embodiment of this application, an equivalent circular area diameter R of the second negative electrode film layer and an equivalent circular area diameter R₁ of the peripheral region satisfy 0.257R ≤ R₁ ≤ 0.9434R. The equivalent circular area diameter of the second negative electrode film layer and the equivalent circular area diameter of the peripheral region satisfying the foregoing condition can allow the lithium source of this application to have a suitable storage space, so that an appropriate amount of active lithium ions can be supplemented to the secondary battery using the lithium source. In addition, the equivalent circular area diameter of the second negative electrode film layer and the equivalent circular area diameter of the peripheral region satisfying the foregoing condition can allow Li⁺ produced by the lithium source under the driving of the potential difference to have a suitable diffusion path, so that the lithium supplementing efficiency and the utilization of the lithium source can be improved. Thus, the first-cycle coulombic efficiency, cycling performance, and storage performance of the secondary battery can be further improved.

In any embodiment of this application, the peripheral region has a first portion and a second portion surrounding the first portion, an equivalent circular area diameter R₂ of the second portion satisfying 0 < R₂ < R₁, optionally 0 < R₂ < 0.5R₁, and more optionally 0 < R₂ < 0.1R₁, where the lithium source is stored in the first portion. A larger distance between a lithium supplementing region and an edge of the second negative electrode film layer leads to a longer diffusion path of Li⁺ released from the lithium source and correspondingly leads to lower lithium supplementing efficiency. However, the edge of the second negative electrode film layer is susceptible to external forces, and therefore the lithium source located at the edge of the second negative electrode film layer may detach from the negative electrode plate, resulting in loss of the lithium source. The peripheral region is divided into a first portion and a second portion located at the edge of the second negative electrode film layer, and the lithium source is stored in the first portion, so that the lithium source can exist stably in the second negative electrode film layer, thereby reducing the risk of loss of the lithium source. Thus, the lithium supplementing efficiency of the secondary battery can be improved.

In any embodiment of this application, the first portion is annular, and a minimum distance d₁ between an outer contour line of the first portion and the edge of the second negative electrode film layer and width d₀ of the second negative electrode film layer satisfy 0 < d₁ <_ d₀/6. The minimum distance d₁ between the outer contour line of the first portion and the edge of the second negative electrode film layer is within the foregoing appropriate range, which can effectively reduce the risk of falling of the lithium source while ensuring that Li⁺ released from the lithium source have diffusion paths with an appropriate length. Thus, the lithium supplementing efficiency of the secondary battery can be improved, thereby improving the first-cycle coulombic efficiency, cycling performance, and storage performance of the secondary battery.

In any embodiment of this application, d₃ ≤ d₂ ≤ d₀/6, where d₂ represents a minimum distance between the outer contour line and sides of the second negative electrode film layer in its length direction, and d₃ represents a minimum distance between the outer contour line and sides of the second negative electrode film layer in its width direction. Some distance is present between the outer contour line of the first portion and the sides of the second negative electrode film layer in its length direction as well as the sides of the second negative electrode film layer in its width direction, and this distance is within a small range, which can effectively reduce the risk of falling of the lithium source while ensuring that Li⁺ released from the lithium source have diffusion paths with an appropriate length. Thus, the lithium supplementing efficiency of the secondary battery can be improved, thereby improving the first-cycle coulombic efficiency, cycling performance, and storage performance of the secondary battery.

In any embodiment of this application, the first portion is a hollow rectangle, and the first portion satisfies: 0 < d₄ ≤ d₀/3, d₄ representing width of the first portion in the width direction of the second negative electrode film layer; and/or 0 < d₅ ≤ l₀/3, d₅ representing width of the first portion in the length direction of the second negative electrode film layer, and l₀ representing length of the second negative electrode film layer. The first portion having an appropriate width can allow the first portion to have an appropriate area to store an appropriate amount of lithium source. The first portion having an appropriate width can also correspondingly allow the second portion and the central region to have an appropriate area. Therefore, when the lithium source is stored in the first portion, an appropriate distance can be present between the lithium source and the center of the second negative electrode film layer and/or the edge of the second negative electrode film layer. Thus, an appropriate amount of active lithium can be stored in the second negative electrode film layer of this application, and the active lithium is less likely to fall off the second negative electrode film layer. In addition, when the secondary battery needs to be supplemented with lithium ions, the active lithium can also diffuse via a short path to be intercalated into the first negative electrode film layer. Therefore, the secondary battery of this application can have high first-cycle coulombic efficiency and good cycling performance and storage performance.

In any embodiment of this application, the secondary battery satisfies 1 mm ≤ d₂ ≤ 5 mm. Optionally, (l₀ - 10 mm) ≤ l₁ ≤ (l₀ - 2 mm), l₁ representing length of the outer contour line. Optionally, 10 mm ≤ d₄ ≤ d₀/5. Optionally, 1 mm ≤ d₃ ≤ 5 mm. Optionally, (d₀ - 10 mm) ≤ l₂ ≤ (d₀ - 2 mm), l₂ representing width of the outer contour line. Optionally, 10 mm ≤ d₅ ≤ d₄. When the secondary battery satisfies at least one of the foregoing conditions, it is beneficial for the second negative electrode film layer to provide sufficient space for storing the lithium source and allows the lithium source to be properly distributed in the second negative electrode film layer. Thus, the lithium source is less likely to fall off the second negative electrode film layer. In addition, when the secondary battery needs to be supplemented with lithium ions, Li⁺ provided by the lithium source can diffuse via a short path to be intercalated into the first negative electrode film layer. Therefore, the secondary battery of this application can have high first-cycle coulombic efficiency and good cycling performance and storage performance.

Optionally, the lithium source is annularly distributed on the first portion. The lithium source being annularly distributed on the first portion can allow the second negative electrode film layer to have an appropriate potential. Thus, Li⁺ in the first negative electrode film layer are less likely to be intercalated into the second negative electrode film layer, thereby further reducing loss of active lithium. Therefore, the secondary battery of this application can have high first-cycle coulombic efficiency and good cycling performance and storage performance.

In any embodiment of this application, an area S₁ of the second negative electrode film layer with the lithium source stored and an area S₂ of the peripheral region satisfy 10% ≤ S₁/S₂ < 100%, optionally 80% ≤ S₁/S₂ <100%, and more optionally 90% ≤ S₁/S₂ < 100%. The ratio of S₁ to S₂ being within an appropriate range can allow an appropriate amount of lithium source to be stored in the second negative electrode film layer. The appropriate amount of lithium source can allow the second negative electrode film layer to have an appropriate potential so as to reduce Li⁺ deintercalated from the first negative electrode film layer and intercalated into the second negative electrode film layer, and can also avoid excess of the lithium source with sufficient active lithium ions provided. This can reduce Li⁺ loss of the secondary battery during cycling, improve lithium supplementing efficiency, and control lithium supplementing costs. Therefore, the secondary battery of this application can have high first-cycle coulombic efficiency, good cycling performance and storage performance, and low costs.

In any embodiment of this application, the lithium source includes at least one of lithium metal, a lithium alloy, a composite of lithium metal and a negative electrode active material, and a composite of an aluminum alloy and a negative electrode active material. Optionally, the lithium alloy includes at least one of a silicon-lithium alloy, an aluminum-lithium alloy, a magnesium-lithium alloy, and a tin-lithium alloy. Lithium metal foil, lithium powder, silicon-lithium alloy, aluminum-lithium alloy, magnesium-lithium alloy, tin-lithium alloy, and other forms of lithium alloys can all be used as a lithium supplementing layer and interact with active substances in the second negative electrode film layer to form the lithium source of this application, thereby implementing lithium supplementing of the secondary battery.

In any embodiment of this application, the secondary battery satisfies 20%C₀ ≤ C_{Li} ≤ 120%C₀, and optionally 90%C₀ ≤ C_{Li} <_ 120%C₀, where C₀ represents active substance capacity per unit area of the second negative electrode film layer, and C_{Li} represents capacity per unit area of the lithium source. With the conventional battery capacity design, C₀ and C_{Li} satisfying the foregoing conditions can allow the speed of the lithium source releasing Li⁺ to be within a more appropriate range, thereby guaranteeing both the lithium supplementing efficiency and safety performance of the secondary battery.

In any embodiment of this application, the secondary battery has a winding structure, the second negative electrode film layer includes a starting region and an ending region in a winding direction, and the secondary battery satisfies C_{A} ≥ C_{B}, C_{A} representing capacity of the lithium source in the starting region, and C_{B} representing capacity of the lithium source in the ending region. Compared with the second negative electrode film layer located in the ending region, the second negative electrode film layer located in the starting region has better electrolyte retention capability, and thus is more conducive to diffusion of Li⁺ released from the lithium source. When a total capacity of the lithium source is constant, the lithium source in the starting region has a higher capacity, which is conducive to improving the lithium supplementing efficiency and the utilization of the lithium source.

In any embodiment of this application, a minimum distance d₇ between the lithium source and the first negative electrode film layer satisfies 0 < d₇ ≤ 10 mm. The minimum distance between the lithium source and the first negative electrode film layer being within the foregoing appropriate range can allow Li⁺ released from the lithium source to have shorter diffusion paths, thereby improving the lithium supplementing efficiency and the utilization of the lithium source.

In any embodiment of this application, a surface of the central region is covered with a barrier layer, the barrier layer including a barrier film and/or a barrier coating. The barrier film is selected from at least one of a casting polypropylene film, a uniaxially oriented polypropylene film, a biaxially oriented polypropylene film, a polyethylene film, a polyester fiber film, and a polyvinyl chloride film. The barrier coating includes at least one of polyvinylidene fluoride, polytetrafluoroethylene, polyphenylacrylamide, polyamide, polyimide, polymethylmethacrylate, polyurethane, polystyrene, polyacrylic acid, polyacrylamide, polyacrylonitrile, or a copolymer of the foregoing substances. The surface of the central region being covered with the barrier layer can reduce the risk of electrolyte infiltration into the central region. This can reduce intercalation of active Li⁺ in the secondary battery into the negative electrode film layer in the central region, further improving the lithium supplementing efficiency and the utilization of the lithium source, thereby improving the first-cycle coulombic efficiency, cycling performance, and storage performance of the secondary battery.

Optionally, thickness of the barrier layer is 6 µm-40 µm, and more optionally, the thickness of the barrier layer is 10 µm-20 µm. With the thickness being within an appropriate range, the barrier layer can have good mechanical strength and thus is less likely to be damaged. In addition, the negative electrode plate can have a thickness within a small range, thus facilitating processing of the negative electrode plate.

A second aspect of this application provides a battery module including the secondary battery of this application.

A third aspect of this application provides a battery pack including the battery module of this application.

A fourth aspect of this application provides an electric apparatus including at least one of the secondary battery, the battery module, or the battery pack of this application.

The electric apparatus of this application includes the secondary battery provided in this application, and therefore has at least the same advantages as the secondary battery.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings in the following description show merely some embodiments of this application, and persons of ordinary skills in the art may still derive other drawings from the accompanying drawings without creative efforts.
FIG. 1 is a schematic diagram of an electrode assembly included in a secondary battery according to an embodiment of the secondary battery in this application.
FIG. 2 is a schematic diagram of an electrode assembly included in a secondary battery according to an embodiment of the secondary battery in this application.
FIG. 3 is a schematic diagram of a second negative electrode film layer according to an embodiment of a secondary battery in this application.
FIG. 4 is a schematic diagram of a second negative electrode film layer according to an embodiment of a secondary battery in this application.
FIG. 5 is a schematic diagram of an embodiment of a secondary battery in this application.
FIG. 6 is a schematic exploded view of an embodiment of a secondary battery in this application.
FIG. 7 is a schematic diagram of an embodiment of a battery module in this application.
FIG. 8 is a schematic diagram of an embodiment of a battery pack in this application.
FIG. 9 is a schematic exploded view of the embodiment of the battery pack shown in FIG. 8.
FIG. 10 is a schematic diagram of an embodiment of an apparatus using a secondary battery in this application as a power source.

In the accompanying drawings, the figures are not necessarily drawn to scale. Description of reference signs: 10. electrode assembly; 11. positive electrode plate; 12. separator; 13. negative electrode plate; 13a. first surface; 13b. second surface; 131. negative electrode film layer provided in starting region and/or negative electrode film layer provided in ending region; 130. second negative electrode film layer; 1310. central region; 1320. peripheral region; 1321. first portion; 1322. second portion; 1321a. outer contour line of first portion; 1321b. inner contour line of first portion; 1. battery pack; 2. upper box body; 3. lower box body; 4. battery module; 5. secondary battery; 51. housing body; 52. electrode assembly; and 53. cover plate.

### DESCRIPTION OF EMBODIMENTS

To make the invention objectives, technical solutions, and beneficial technical effects of this application clearer, the following further describes this application in detail with reference to some embodiments. It should be understood that the embodiments described in this specification are merely intended to interpret this application, but not to limit this application.

For simplicity, only some numerical ranges are explicitly disclosed in this specification. However, any lower limit may be combined with any upper limit to form a range not explicitly recorded; any lower limit may be combined with another lower limit to form a range not explicitly recorded; and likewise, any upper limit may be combined with any other upper limit to form a range not explicitly recorded. In addition, although not explicitly recorded, each point or individual value between end points of a range is included in the range. Therefore, each point or individual value may itself be a lower limit or upper limit to be combined with any other point or individual value or combined with any other lower limit or upper limit to form a range not explicitly recorded.

In the description of this specification, it should be noted that "more than" and "less than" are inclusive of the present number and that "more" in "one or more" means two or more than two, unless otherwise stated.

In the description of this specification, unless otherwise stated, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

It should be understood that relational terms such as "first" and "second" are used only to differentiate an entity or operation from another entity or operation, and do not necessarily require or imply that any actual relationship or sequence exists between these entities or operations.

The foregoing summary of this application is not intended to describe each of the disclosed embodiments or implementations of this application. The following description illustrates exemplary embodiments in more detail by using examples. Throughout this application, guidance is provided by using a series of embodiments, and these embodiments may be used in various combinations. In the examples, enumeration is merely representative but should not be interpreted as exhaustive.

During the first charge of a secondary battery, a SEI (solid electrolyte interface, solid electrolyte interface) film is inevitably formed on the surface of a negative electrode active material, resulting in irreversible consumption of active ions, which leads to difficulty in compensation for irreversible capacity loss of the secondary battery.

To meet the demand of a lithium-ion secondary battery for high energy density, a lithium supplementing technology may be used to increase active lithium content and compensate for active lithium loss of the lithium-ion secondary battery during the first charge. Currently, a negative electrode lithium supplementing process is the main lithium supplementing technology with high technology maturity. For example, a surface of a negative electrode plate is covered with a lithium metal layer using lithium powder or lithium foil. The lithium can be released gradually during manufacturing and full lifespan use of a lithium-ion secondary battery and compensate for active lithium loss caused by internal side reactions of the lithium-ion secondary battery, so as to greatly avoid capacity decrease of the lithium-ion secondary battery.

In related technologies, a lithium source (for example, a lithium metal layer) is generally provided on a surface of a negative electrode current collector to implement lithium supplementing for a lithium-ion secondary battery. However, the inventors have found that with the lithium source provided on the surface of the negative electrode current collector, after electrolyte is injected into the secondary battery, lithium in the lithium source produces Li⁺ under the action of a potential difference, and these Li⁺ ions are preferentially intercalated into a negative electrode film layer closest to them. A large amount of Li⁺ being intercalated into a small region of the negative electrode film layer may lead to local Li⁺ excess, making it difficult for Li⁺ to be intercalated entirely, thus inducing risks such as lithium precipitation on the surface of the negative electrode plate, degraded cycling performance, and battery short circuit.

In addition, the inventors have found through in-depth research that in a lithium-ion secondary battery, a negative electrode film layer may include a first negative electrode film layer provided opposite a positive electrode film layer with a separator therebetween and a second negative electrode film layer not provided opposite the positive electrode film layer. During charge of the secondary battery, under driving of the potential difference, Li⁺ ions deintercalated from the positive electrode film layer are preferentially intercalated into the first negative electrode film layer after passing through the separator, and therefore the first negative electrode film layer may also be referred to as a reaction region negative electrode film layer. In addition to the first negative electrode film layer or reaction region negative electrode film layer, the negative electrode film layer may further include a second negative electrode film layer that is a negative electrode film layer not provided opposite the positive electrode film layer. The second negative electrode film layer may also be referred to as a non-reaction region negative electrode film layer. During charge of the lithium-ion secondary battery, after Li⁺ ions deintercalated from the positive electrode are intercalated into the reaction region, a potential of the reaction region decreases and results in a potential difference with a non-reaction region, in which case Li⁺ ions in the reaction region slowly diffuse to and are intercalated into the non-reaction region. It is difficult for Li⁺ intercalated into the non-reaction region to return to the positive electrode during discharge, which also causes irreversible loss of active lithium, thereby reducing first-cycle coulombic efficiency, cycling performance, and storage performance of the lithium-ion secondary battery. For this technical issue, few solutions are available yet so far.

In view of this, the inventors through in-depth thought provide a secondary battery and a battery module, battery pack, and electric apparatus containing such secondary battery.

### Secondary battery

A first aspect of this application provides a secondary battery including a positive electrode plate, a separator, and a negative electrode plate. The positive electrode plate is provided with a positive electrode film layer. The negative electrode plate includes a first negative electrode film layer and a second negative electrode film layer, where the first negative electrode film layer is provided opposite the positive electrode film layer with the separator therebetween. The second negative electrode film layer includes a negative electrode film layer not provided opposite the positive electrode film layer. The second negative electrode film layer includes a central region and a peripheral region surrounding the central region, where a lithium source used for supplementing lithium to the first negative electrode film layer is stored in at least a portion of the peripheral region of the second negative electrode film layer.

In this application, the first negative electrode film layer may also be referred to as a reaction region negative electrode film layer, and the second negative electrode film layer may also be referred to as a non-reaction region negative electrode film layer. Positions of the first negative electrode film layer and the second negative electrode film layer in the secondary battery are not limited in this application, which can be determined according to a structure of the secondary battery. The structure of the secondary battery is not limited in this application.

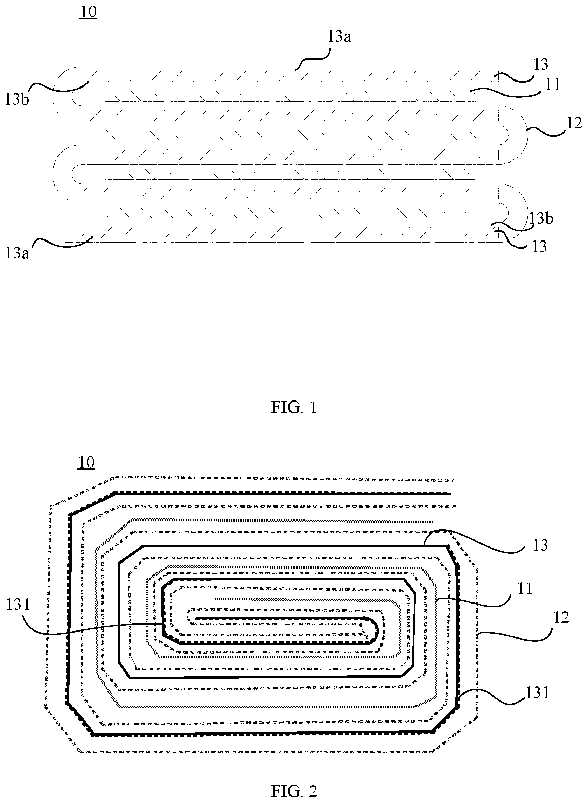

For example, the secondary battery of this application may include an electrode assembly having a stacked structure. As shown in FIG. 1, an electrode assembly 10 includes a positive electrode plate 11, a separator 12, and negative electrode plates 13. A negative electrode plate 13 located at an outermost side of the electrode assembly includes a first surface 13a facing an outer side of the electrode assembly 10 and a second surface 13b facing an inner side of the electrode assembly 10. As shown in FIG. 1, the electrode assembly 10 includes two negative electrode plates 13 located at the outermost sides, and a negative electrode film layer (not shown in the figure) may be provided on the first surface 13a of either or both of the two negative electrode plates 13. The negative electrode film layer provided on the first surface 13a is an example of a second negative electrode film layer according to an embodiment of this application. A negative electrode film layer is also provided on another surface (including the surface 13b) of the negative electrode plate in the electrode assembly 10, which is provided opposite a positive electrode film layer (not shown in the figure) on the positive electrode plate 11 with the separator 12 therebetween. Such negative electrode film layer is an example of a first negative electrode film layer according to an embodiment of this application.

For example, the secondary battery of this application may include an electrode assembly having a winding structure. As shown in FIG. 2, an electrode assembly 10 includes a positive electrode plate 11, a separator 12, and a negative electrode plate 13. Negative electrode film layers 131 may be provided on the negative electrode plate 13 in a starting region in a winding direction (a central empty winding region of the electrode assembly) and an ending region in the winding direction (a peripheral ending region of the electrode assembly). It is easily understood that in the electrode assembly 10, the negative electrode film layer 131 provided in the starting region and/or the negative electrode film layer 131 provided in the ending region is an example of a second negative electrode film layer according to an embodiment of this application. Another region of the negative electrode plate 13 may include a negative electrode film layer (not shown in the figure) provided opposite a positive electrode film layer (not shown in the figure) on the positive electrode plate 11. Such negative electrode film layer is an example of a first negative electrode film layer according to an embodiment of this application.

In this application, the central region and the peripheral region have well-known meanings in the art. For example, the central region may represent a region closer to the geometric center of the second negative electrode film layer compared to the peripheral region, and the peripheral region may represent a region closer to an edge of the second negative electrode film layer compared to the central region. Shapes of the central region and the peripheral region are not limited in this application. For example, the central region may be rectangular, square, parallelogram, circular, elliptical, polygonal, or irregular.

The lithium source of this application may be a lithium source formed by a lithium supplementing agent placed on a surface of the peripheral region of the second negative electrode film layer. The lithium supplementing agent may be a well-known lithium supplementing agent for negative electrodes in the art, for example, it may include but is not limited to a lithium metal foil, lithium powder, a silicon-lithium alloy, an aluminum-lithium alloy, a magnesium-lithium alloy, a tin-lithium alloy, or other forms of lithium alloys. The lithium source may include a lithium-rich compound formed by a reaction between the lithium supplementing agent and a negative electrode active material in the negative electrode film layer, and an unreacted lithium supplementing agent that may be present. For example, the lithium source may include at least one of a lithium supplementing agent, LiCₓ (x ≥ 6) formed by a reaction between the lithium supplementing agent and a carbon negative electrode material, LiySi_{z} (y > 0) formed by a reaction between the lithium supplementing agent and a silicon negative electrode material, and the like. In some embodiments, at least a portion of the surface of the peripheral region of the second negative electrode film layer may be covered with lithium metal, so as to form a lithium supplementing layer. Then, electrolyte is injected into the secondary battery, so that the lithium supplementing layer reacts with the negative electrode active material in the negative electrode film layer to form the lithium source of this application. The standard electrode potential of lithium metal to hydrogen is -3.05 V, and the standard potential of a lithium-unintercalated negative electrode active material (for example, graphite or silicon-carbon composite material) to hydrogen is about 0 V After the electrolyte is injected into the secondary battery, a loop can be formed due to direct contact between the lithium metal and the negative electrode film layer, which is equivalent to a direct short circuit in a battery using the lithium metal as a negative electrode and the negative electrode film layer as a positive electrode, and at least part of the lithium metal loses electrons and is intercalated into the negative electrode film layer in the form of Li⁺, thus implementing the storage of the lithium source of this application in the peripheral region of the second negative electrode film layer.

Although the mechanism is still unclear, the inventors have unexpectedly found that the storage of the lithium source used for supplementing lithium to the first negative electrode film layer in the peripheral region of the second negative electrode film layer can effectively improve the first-cycle coulombic efficiency, cycling performance, and storage performance of the secondary battery.

Without being intended to be limited by any theory or explanation, the lithium source used for supplementing lithium to the first negative electrode film layer is stored in the peripheral region of the second negative electrode film layer, and the region with the lithium source stored can have a low potential. Thus, during charge of a lithium-ion secondary battery, after Li⁺ deintercalated from a positive electrode are intercalated into the first negative electrode film layer, a small potential difference can be kept between the first negative electrode film layer and the second negative electrode film layer despite of the potential decrease of the first negative electrode film layer, so that diffusion and intercalation of Li⁺ into the second negative electrode film layer can be prevented. During discharge of the lithium-ion secondary battery, the potential of the first negative electrode film layer gradually increases, and when the potential of the first negative electrode film layer is far higher than that of the second negative electrode film layer, Li⁺ is produced by the lithium source under driving of the potential difference between the first negative electrode film layer and the second negative electrode film layer, and the Li⁺ ions diffuse slowly to the first negative electrode film layer. Thus, active lithium lost during charge and discharge cycles of the lithium-ion secondary battery can be compensated for, thereby significantly improving the first-cycle coulombic efficiency, cycling performance, and storage performance of the secondary battery. Further, the lithium source of this application is stored in the peripheral region of the second negative electrode film layer. Compared with the central region, the peripheral region has a shorter distance to the first negative electrode film layer. When the lithium source produces Li⁺ under the driving of the potential difference, Li⁺ can have a shorter diffusion path, which can avoid loss of Li⁺ during diffusion, thus significantly improving lithium supplementing efficiency and utilization of the lithium source.

In some embodiments, an equivalent circular area diameter R of the second negative electrode film layer and an equivalent circular area diameter R₁ of the peripheral region may satisfy 0.257R ≤ R₁ ≤ 0.9434R, 0.3R ≤ R₁ ≤ 0.85R, 0.35R ≤ R₁ ≤ 0.8R, 0.4R ≤ R₁ ≤ 0.75R, 0.45R ≤ R₁ ≤ 0.7R, 0.5R ≤ R₁ ≤ 0.65R, or 0.55R ≤ R₁ ≤ 0.6R.

In this application, the equivalent circular area diameter may represent a diameter corresponding to a circle having the same area as a defined region. For example, the equivalent circular area diameter of the second negative electrode film layer represents a diameter corresponding to a circle having the same area as the second negative film layer, and the equivalent circular area diameter of the peripheral region represents a diameter corresponding to a circle having the same area as the peripheral region.

Without being intended to be limited by any theory or explanation, the equivalent circular area diameter of the second negative electrode film layer and the equivalent circular area diameter of the peripheral region satisfying the foregoing condition can allow the lithium source of this application to have a suitable storage space, so that an appropriate amount of active lithium ions can be supplemented to the secondary battery using the lithium source. In addition, the equivalent circular area diameter of the second negative electrode film layer and the equivalent circular area diameter of the peripheral region satisfying the foregoing condition can allow Li⁺ formed by the lithium source under the driving of the potential difference to have a suitable diffusion path, so that the lithium supplementing efficiency and the utilization of the lithium source can be improved. Thus, the first-cycle coulombic efficiency, cycling performance, and storage performance of the secondary battery can be further improved.

In some embodiments, the peripheral region has a first portion and a second portion surrounding the first portion, an equivalent circular area diameter R₂ of the second portion satisfying 0 < R₂ < R₁, optionally 0 < R₂ < 0.5R₁, and more optionally 0 < R₂ < 0.1R₁, where the lithium source is stored in the first portion.

Shapes of the first portion and the second portion are not limited in this application. For example, the first portion may be of annular shapes such as a circular ring, an elliptical ring, or a hollow rectangle, or has an irregular shape. The lithium source used for supplementing lithium to the first negative electrode film layer is stored in at least a portion of the first portion.

It is not intended to be limited by any theory or explanation that the inventors have found that a larger distance between a lithium supplementing region and an edge of the second negative electrode film layer leads to a longer diffusion path of Li⁺ released from the lithium source and correspondingly leads to lower lithium supplementing efficiency. However, the edge of the second negative electrode film layer is susceptible to external forces, and therefore the lithium source located at the edge of the second negative electrode film layer may detach from the negative electrode plate, resulting in loss of the lithium source. The peripheral region is divided into a first portion and a second portion located at the edge of the second negative electrode film layer, and the lithium source is stored in the first portion, so that the lithium source can exist stably in the second negative electrode film layer, thereby reducing the risk of loss of the lithium source. Thus, the lithium supplementing efficiency of the secondary battery can be improved.

In some embodiments, the first portion is annular, and a minimum distance d₁ between an outer contour line of the first portion and the edge of the second negative electrode film layer and width d₀ of the second negative electrode film layer may satisfy 0 < d₁ ≤ d₀/6.

The annular shape is not limited in this embodiment and may specifically include a graph enclosed by a closed outer contour line and a closed inner contour line. For example, the first portion may be of annular shapes such as a circular ring, an elliptical ring, or a hollow rectangle, or has an irregular shape.

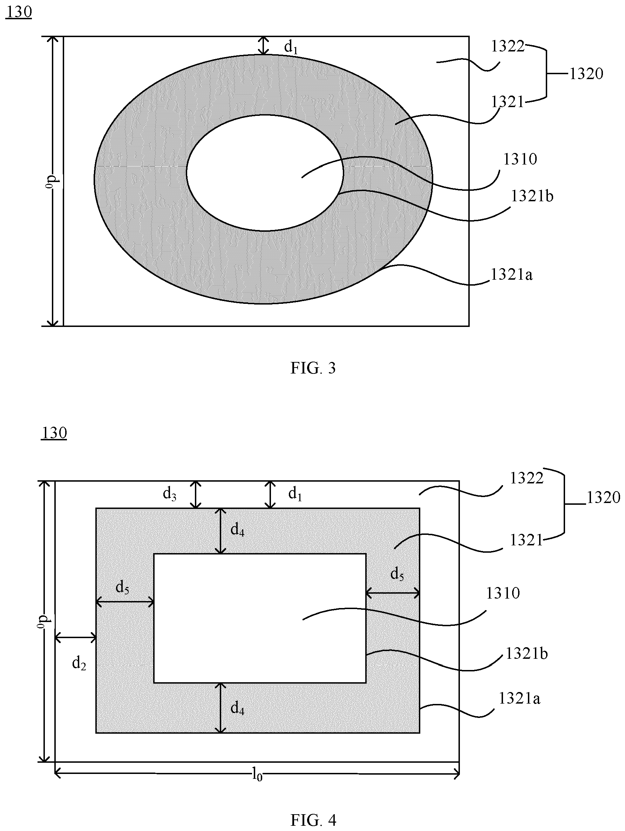

FIG. 3 is a schematic diagram of a second negative electrode film layer according to an embodiment of a secondary battery in this application. This exemplary second negative electrode film layer 130 includes a central region 1310 and a peripheral region 1320. The peripheral region 1320 includes a first portion 1321 of an elliptical ring shape and a second portion 1322. The first portion 1321 is enclosed by an outer contour line 1321a and an inner contour line 1321b. A lithium source used for supplementing lithium to a first negative electrode film layer is stored in at least a portion of the first portion 1321. A minimum distance d₁ between the outer contour line 1321a of the first portion and an edge of the second negative electrode film layer may be shown in FIG. 3.

FIG. 4 is a schematic diagram of a second negative electrode film layer according to another embodiment of a secondary battery in this application. This exemplary second negative electrode film layer 130 includes a central region 1310 and a peripheral region 1320. The peripheral region 1320 includes a first portion 1321 of a hollow rectangle shape and a second portion 1322. The first portion 1321 is enclosed by an outer contour line 1321a and an inner contour line 1321b. A lithium source used for supplementing lithium to a first negative electrode film layer is stored in at least a portion of the first portion 1321. A minimum distance d₁ between the outer contour line 1321a of the first portion and an edge of the second negative electrode film layer 130 may be shown in FIG. 4.

It is not intended to be limited by any theory or explanation that the minimum distance d₁ between the outer contour line of the first portion and the edge of the second negative electrode film layer is within the foregoing appropriate range, which can effectively reduce the risk of falling of the lithium source while ensuring that Li⁺ released from the lithium source have diffusion paths with an appropriate length. Thus, the lithium supplementing efficiency of the secondary battery can be improved, thereby improving the first-cycle coulombic efficiency, cycling performance, and storage performance of the secondary battery.

In some embodiments, the secondary battery may satisfy d₃ ≤ d₂ ≤ d₀/6, where d₂ represents a minimum distance between the outer contour line and sides of the second negative electrode film layer in its length direction, and d₃ represents a minimum distance between the outer contour line and sides of the second negative electrode film layer in its width direction.

In some embodiments, as shown in FIG. 4, d₂ represents a minimum distance between the outer contour line 1321a and sides of the second negative electrode film layer 130 in its length direction, and d₃ represents a minimum distance between the outer contour line and sides of the second negative electrode film layer 130 in its width direction. d₃ ≤ d₂ ≤ d₀/6, where d₃ = d₁.

It is not intended to be limited by any theory or explanation that some distance is present between the outer contour line of the first portion and the sides of the second negative electrode film layer in its length direction as well as the sides of the second negative electrode film layer in its width direction, and this distance is within a small range, which can effectively reduce the risk of falling of the lithium source while ensuring that Li⁺ released from the lithium source have diffusion paths with an appropriate length. Thus, the lithium supplementing efficiency of the secondary battery can be improved, thereby improving the first-cycle coulombic efficiency, cycling performance, and storage performance of the secondary battery.

In some embodiments, as shown in FIG. 4, the first portion 1321 is of a hollow rectangular shape, and the first portion 1321 may satisfy 0 < d₄ ≤ d₀/3, and/or 0 < d₅ ≤ l₀/3, where d₄ represents width of the first portion 1321 in the width direction of the second negative electrode film layer 130, d₅ represents width of the first portion 1321 in the length direction of the second negative electrode film layer 130, and l₀ represents length of the second negative electrode film layer 130.

In some embodiments, the first portion may be of a hollow rectangle shape, and the geometric centers of the outer contour line and the inner contour line of the first portion may not coincide. In this case, the first portion has two unequal widths d₄₁ and d₄₂ in the width direction of the second negative electrode film layer, and d₄₁ and d₄₂ may both be greater than 0 and less than or equal to d₀/3; and the first portion has two unequal widths d₅₁ and d₅₂ in the length direction of the second negative electrode film layer, and d₅₁ and d₅₂ may both be greater than 0 and less than or equal to l₀/3.

It is not intended to be limited by any theory or explanation that the first portion having an appropriate width can allow the first portion to have an appropriate area to store an appropriate amount of lithium source. The first portion having an appropriate width can also correspondingly allow the second portion and the central region to have an appropriate area. Therefore, when the lithium source is stored in the first portion, an appropriate distance can be present between the lithium source and the center of the second negative electrode film layer and/or the edge of the second negative electrode film layer. Thus, an appropriate amount of active lithium can be stored in the second negative electrode film layer of this application, and the active lithium is less likely to fall off the second negative electrode film layer. In addition, when the secondary battery needs to be supplemented with lithium ions, the active lithium can diffuse via a short path to be intercalated into the first negative electrode film layer. Therefore, the secondary battery of this application can have high first-cycle coulombic efficiency and good cycling performance and storage performance.

In some embodiments, the secondary battery may satisfy 1 mm ≤ d₂ ≤ 5 mm.

Optionally, (l₀ - 10 mm) ≤ l₁ ≤ (l₀ - 2 mm), l₁ representing length of the outer contour line.

Optionally, 10 mm ≤ d₄ ≤ d₀/5.

Optionally, 1 mm ≤ d₃ ≤ 5 mm.

Optionally, (d₀ - 10 mm) ≤ l₂ ≤ (d₀ - 2 mm), l₂ representing width of the outer contour line.

Optionally, 10 mm ≤ d₅ ≤ d₄.

When the secondary battery satisfies at least one of the foregoing conditions, it is beneficial for the second negative electrode film layer to provide sufficient space for storing the lithium source and allows the lithium source to be properly distributed in the second negative electrode film layer. Thus, the lithium source is less likely to fall off the second negative electrode film layer. In addition, when the secondary battery needs to be supplemented with lithium ions, Li⁺ provided by the lithium source can diffuse via a short path to be intercalated into the first negative electrode film layer. Therefore, the secondary battery of this application can have high first-cycle coulombic efficiency and good cycling performance and storage performance.

Optionally, the lithium source is annularly distributed on the first portion.

It is not intended to be limited by any theory or explanation that the lithium source being annularly distributed on the first portion can allow the second negative electrode film layer to have an appropriate potential. Thus, Li⁺ in the first negative electrode film layer are less likely to be intercalated into the second negative electrode film layer, thereby further reducing loss of active lithium. Therefore, the secondary battery of this application can have high first-cycle coulombic efficiency and good cycling performance and storage performance.

In some embodiments, an area S₁ of the second negative electrode film layer with the lithium source stored and an area S₂ of the peripheral region may satisfy 10% ≤ S₁/S₂ <_ 100%, optionally 80% ≤ S₁/S₂ <100%, and more optionally 90% ≤ S₁/S₂ < 100%.

It is not intended to be limited by any theory or explanation that the ratio of S₁ to S₂ being within the foregoing appropriate range can allow an appropriate amount of lithium source to be stored in the second negative electrode film layer. The appropriate amount of lithium source can allow the second negative electrode film layer to have an appropriate potential so as to reduce Li⁺ deintercalated from the first negative electrode film layer and intercalated into the second negative electrode film layer, and can also avoid excess of the lithium source with sufficient active lithium ions provided. This can reduce Li⁺ loss of the secondary battery during cycling, improve lithium supplementing efficiency, and control lithium supplementing costs. Therefore, the secondary battery of this application can have high first-cycle coulombic efficiency, good cycling performance and storage performance, and low costs.

In some embodiments, the lithium source may include at least one of lithium metal, a lithium alloy, a composite of lithium metal and a negative electrode active material, and a composite of an aluminum alloy and a negative electrode active material, and optionally, it may be the lithium metal and/or the composite of the lithium metal and the negative electrode active material. Optionally, the lithium alloy includes at least one of a silicon-lithium alloy, an aluminum-lithium alloy, a magnesium-lithium alloy, and a tin-lithium alloy.

Without being intended to be limited by any theory or explanation, the inventors have found that lithium metal foil, lithium powder, silicon-lithium alloy, aluminum-lithium alloy, magnesium-lithium alloy, tin-lithium alloy, and other forms of lithium alloys can all be used as a lithium supplementing layer and interact with active substances in the second negative electrode film layer to form the lithium source of this application. The lithium metal (including lithium metal foil, lithium powder, and the like) has a high gram capacity, and no impurities are generated after reaction between the lithium metal and the negative electrode active material. Therefore, the lithium source formed from the lithium metal can have higher lithium supplementing efficiency. Further, the lithium metal foil has good processability. The lithium metal foil is applied onto the surface of the second negative electrode film layer and reacts with the negative electrode active material to form a lithium source, so that the secondary battery of this application can have a high yield with the lithium supplementing efficiency improved.

In some embodiments, the secondary battery may satisfy 20%C₀ <_ C_{Li} ≤ 120%C₀, where C₀ represents active substance capacity per unit area of the second negative electrode film layer, and C_{Li} represents capacity per unit area of the lithium source. Optionally, 90%C₀ <_ C_{Li} <_ 120%C₀.

In this application, the active substance capacity C₀ per unit area of the second negative electrode film layer may represent capacity of the negative electrode active material per unit area of the second negative electrode film layer. Typically, C₀ may be equal to the active substance capacity per unit area of the first negative electrode film layer. The capacity C_{Li} per unit area of the lithium source may represent capacity per unit area of the lithium source contained in the second negative electrode film layer with the lithium source stored.

The inventors have unexpectedly found that when C₀ and C_{Li} satisfy the foregoing conditions, the secondary battery can have high first-cycle coulombic efficiency, good cycling performance, good storage performance, and good safety performance. It is not intended to be limited by any theory or explanation that when C_{Li} is small, the region with the lithium source stored has a high potential, and during discharge of the secondary battery, the first film layer needs to reach a high potential to form a sufficient potential difference with the second negative electrode film layer, so as to drive the lithium source to release Li⁺ and make Li⁺ diffuse slowly to the first negative electrode film layer. When C_{Li} is large, the region with the lithium source stored has a low potential, and thus is more likely to form a sufficient potential difference with the second negative electrode film layer, which allows the lithium source to release Li⁺ quickly. When Li⁺ is released too fast, it may be difficult for Li⁺ to be intercalated into the first negative electrode film layer in time, thus leading to the risk of local lithium precipitation at the negative electrode plate. With the conventional battery capacity design, C₀ and C_{Li} satisfying the foregoing conditions can allow the speed of the lithium source releasing Li⁺ to be within a more appropriate range, thereby guaranteeing both the lithium supplementing efficiency and safety performance of the secondary battery.

In some embodiments, the secondary battery has a winding structure, the second negative electrode film layer includes a starting region and an ending region in a winding direction, and the secondary battery may satisfy C_{A} ≥ C_{B}, C_{A} representing capacity of the lithium source in the starting region, and C_{B} representing capacity of the lithium source in the ending region.

It is not intended to be limited by any theory or explanation that the inventors have found that compared with the second negative electrode film layer located in the ending region, the second negative electrode film layer located in the starting region has better electrolyte retention capability, and thus is more conducive to diffusion of Li⁺ released from the lithium source. When a total capacity of the lithium source is constant, the lithium source in the starting region has a higher capacity, which is conducive to improving the lithium supplementing efficiency and the utilization of the lithium source.

In some embodiments, a minimum distance d₇ between the lithium source and the first negative electrode film layer may satisfy 0 < d₇ ≤ 10 mm.

It is not intended to be limited by any theory or explanation that the minimum distance between the lithium source and the first negative electrode film layer being within the foregoing appropriate range can allow Li⁺ released from the lithium source to have shorter diffusion paths, thereby improving the lithium supplementing efficiency and the utilization of the lithium source.

In some embodiments, a surface of the central region is covered with a barrier layer, the barrier layer including a barrier film and/or a barrier coating. The material of the barrier film is not limited in this application, as long as it can block contact between the electrolyte and the central region, which may be a single-sided adhesive film or a double-sided adhesive film, and preferably a single-sided adhesive film. Optionally, an adhesive force between at least one surface of the barrier film and the surface of the central region may be greater than 20 N/m, and more optionally, the adhesive force between the barrier film and the surface of the central region is greater than a cohesive force of the second negative electrode film layer.

Optionally, the barrier film is selected from at least one of a casting polypropylene film, a uniaxially oriented polypropylene film, a biaxially oriented polypropylene film, a polyethylene film, a polyester fiber film, and a polyvinyl chloride film. The barrier coating includes at least one of polyvinylidene fluoride, polytetrafluoroethylene, polyphenylacrylamide, polyamide, polyimide, polymethylmethacrylate, polyurethane, polystyrene, polyacrylic acid, polyacrylamide, polyacrylonitrile, or a copolymer of the foregoing substances.

It is not intended to be limited by any theory or explanation that the surface of the central region being covered with the barrier layer can reduce the risk of electrolyte infiltration into the central region. This can reduce intercalation of active Li⁺ in the secondary battery into the negative electrode film layer in the central region, further improving the lithium supplementing efficiency and the utilization of the lithium source, thereby improving the first-cycle coulombic efficiency, cycling performance, and storage performance of the secondary battery.

Optionally, thickness of the barrier layer is 6 µm-40 µm, and more optionally, the thickness of the barrier layer is 10 µm-20 µm.

With the thickness being within an appropriate range, the barrier layer can have good mechanical strength and thus is less likely to be damaged. In addition, the negative electrode plate can have a thickness within a small range, thus facilitating processing of the negative electrode plate.

In this application, the length and width of the negative electrode film layer have well-known meanings in the art. For example, when the secondary battery includes an electrode assembly having a winding structure, the length of the negative electrode film layer may represent the length of the negative electrode film layer in a winding direction of the electrode assembly, and the width of the negative electrode film layer may represent the length of the negative electrode film layer perpendicular to the winding direction. When the secondary battery includes an electrode assembly having a stacked structure, the length of the negative electrode film layer may represent length of a longer side of the negative electrode film layer, and the width of the negative electrode film layer may represent length of a shorter side of the negative electrode film layer.

In this application, C₀ can be obtained by performing a capacity test on the second negative electrode film layer with no lithium source stored. For example, one side of the negative electrode film layer is scrubbed to expose an empty substrate, and an electrode plate with the negative electrode film layer on one side is punched into small discs with an area of S. Capacity C of the small disc with the negative electrode film layer is tested using a button lithium half-cell, and the capacity C₀ per unit area of the negative electrode film layer is calculated according to a formula C₀ = C/S.

In this application, C_{Li} can be calculated using a well-known method in the art. For example, when the lithium source is formed from lithium metal foil applied onto the peripheral region of the second negative electrode film layer, capacity C₁ of lithium foil can be calculated according to weight and theoretical gram capacity of the lithium foil, an area S' of the lithium foil is then measured, and C_{Li} can be calculated. C_{Li} can be calculated according to the following formula: C_{Li} = C₁/S'.

In the secondary battery of this application, the negative electrode plate includes a negative electrode current collector and a negative electrode film layer provided on at least one surface of the negative electrode current collector and including a negative electrode active material. For example, the negative electrode current collector includes two opposite surfaces in its thickness direction, and the negative electrode film layer is provided on either or both of the two opposite surfaces of the negative electrode current collector.

As previously described with reference to FIG. 1 and FIG. 2, in the embodiments of this application, the negative electrode film layer includes the first negative electrode film layer and the second negative electrode film layer described in this application.

The negative electrode active material is not limited to a specific type, and may be a well-known negative electrode active material for secondary batteries in the art. For example, the negative electrode active material may include one or more of graphite, soft carbon, hard carbon, meso-carbon microbeads, a silicon-based material, a tin-based material, and lithium titanate. The silicon-based material may include one or more of elemental silicon, silicon oxide, a silicon-carbon composite, a silicon-nitrogen composite, and a silicon alloy material. The tin-based material may include one or more of elemental tin, tin oxide, and a tin alloy material. This application is not limited to these materials, and may also use other conventional well-known materials that can be used as the negative electrode active material for the secondary battery. One of these negative electrode active materials may be used alone, or two or more of them may be used in combination.

In some embodiments, the negative electrode active material includes one or more of artificial graphite, natural graphite, and a silicon-based material. The negative electrode active material being selected from the foregoing types of materials can allow the second negative electrode film layer to have an appropriate potential, thereby improving the lithium supplementing efficiency and the utilization of the lithium source.

The negative electrode current collector is not limited to a specific type, and may be selected based on actual needs. For example, the negative electrode current collector may be a metal foil or a composite current collector. For example, a copper foil may be used as the metal foil for the negative electrode current collector. The composite current collector may include a polymer material matrix and a metal material layer formed on at least one surface of the polymer material matrix. For example, the metal material may be selected from one or more of copper, copper alloy, nickel, nickel alloy, titanium, titanium alloy, silver, and silver alloy. For example, the polymer material matrix may be selected from one or more of polypropylene (PP), polyethylene terephthalate (PET), polybutylene terephthalate (PBT), polystyrene (PS), and polyethylene (PE).

In the secondary battery of this application, the negative electrode film layer is typically formed by applying a negative electrode slurry onto the negative electrode current collector, followed by drying and cold pressing. The negative electrode slurry is typically formed by dispersing the negative electrode active material, an optional conductive agent, an optional binder, and another optional additive in a solvent and stirring them to uniformity. The solvent may be but is not limited to N-methylpyrrolidone (NMP) or water. For example, the conductive agent may include one or more of superconducting carbon, carbon black (for example, acetylene black or Ketjen black), carbon dots, carbon nanotubes, graphene, and carbon nanofiber. The binder may include one or more of styrene-butadiene rubber (SBR), water-soluble unsaturated resin SR-1B, water-based acrylic resin, polyvinyl alcohol (PVA), sodium alginate (SA), and carboxymethyl chitosan (CMCS). The another optional additive is, for example, a thickener (for example, sodium carboxymethyl cellulose CMC-Na) or a PTC thermistor material.

In addition, in the secondary battery of this application, the negative electrode plate does not exclude additional functional layers other than the negative electrode film layer. For example, in some embodiments, the negative electrode plate described in this application may further include a conductive primer layer (for example, formed by a conductive agent and a binder) disposed between the negative electrode current collector and the negative electrode film layer. In some other embodiments, the negative electrode plate of this application further includes a protection layer covering the surface of the negative electrode film layer.

In the secondary battery of this application, the positive electrode plate includes a positive electrode current collector and a positive electrode film layer provided on at least one surface of the positive electrode current collector and including a positive electrode active material. For example, the positive electrode current collector has two opposite surfaces in its thickness direction, and the positive electrode film layer is provided on either or both of the two opposite surfaces of the positive electrode current collector.

The positive electrode active material is not limited to a specific type, and may be a well-known positive electrode active material for secondary batteries in the art. For example, the positive electrode active material may include one or more of lithium transition metal oxide, olivine-structured lithium-containing phosphate, and respective modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include but are not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof. This application is not limited to these materials, and may also use other conventional well-known materials that can be used as the positive electrode active material for the secondary battery.

The negative electrode current collector is not limited to a specific type, and may be selected based on actual needs. For example, the positive electrode current collector may be a metal foil or a composite current collector (the composite current collector may be formed by providing a metal material on a polymer matrix). For example, the positive electrode current collector may be aluminum foil.

In the secondary battery of this application, the positive electrode film layer typically includes the positive electrode active material, an optional binder, and an optional conductive agent, and is typically formed by applying a positive electrode slurry, followed by drying and cold pressing. The positive electrode slurry is typically formed by dispersing the positive electrode active material, the optional conductive agent, the optional binder, and the like in a solvent and stirring them to uniformity. The solvent may be N-methylpyrrolidone (NMP).

For example, the binder for the positive electrode film layer may include one or more of polyvinylidene fluoride (PVDF) and polytetrafluoroethylene (PTFE).

For example, the conductive agent for the positive electrode film layer may include one or more of superconducting carbon, carbon black (for example, acetylene black or Ketjen black), carbon dots, carbon nanotubes, graphene, and carbon nanofiber.

The secondary battery of this application has no specific limitation on a type of an electrolyte, and the electrolyte can be selected based on requirements. For example, the electrolyte may be selected from at least one of a solid electrolyte and a liquid electrolyte (namely, an electrolyte).

In some embodiments, the electrolyte is a liquid electrolyte. The liquid electrolyte includes an electrolytic salt and a solvent.

In some embodiments, the electrolytic salt may be selected from one or more of LiPF₆ (lithium hexafluorophosphate), LiBF₄ (lithium tetrafluoroborate), LiClO₄ (lithium perchlorate), LiAsF₆ (lithium hexafluoroborate), LiFSI (lithium bis(fluorosulfonyl)imide), LiTFSI (lithium bistrifluoromethanesulfonimide), LiTFS (lithium trifluoromethanesulfonate), LiDFOB (lithium difluoro(oxalato)borate), LiBOB (lithium bisoxalate borate), LiPO₂F₂ (lithium difluorophosphate), LiDFOP (lithium difluoro(dioxalato)phosphate), and LiTFOP (lithium tetrafluoro oxalato phosphate).

In some embodiments, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), methyl ethyl sulfone (EMS), and diethyl sulfone (ESE).

In some embodiments, the liquid electrolyte further optionally includes an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature performance of the battery.

Secondary batteries using a liquid electrolyte and some secondary batteries using a solid electrolyte further include a separator. The separator is disposed between the positive electrode plate and the negative electrode plate for separation. The separator is not limited to any particular type in this application, and may be any well-known porous separator with good chemical stability and mechanical stability. In some embodiments, a material of the separator may be selected from one or more of glass fiber, non-woven fabric, polyethylene, polypropylene, and polyvinylidene fluoride. The separator may be a single-layer film or a multi-layer composite film. When the separator is a multi-layer composite film, all layers may be made of same or different materials.

In some embodiments, the positive electrode plate, the negative electrode plate, and the separator may be made into an electrode assembly through winding or lamination.

In some embodiments, the secondary battery may include an outer package. The outer package can be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, for example, one or more of polypropylene (PP), polybutylene terephthalate (PBT), polybutylene succinate (PBS), and the like.

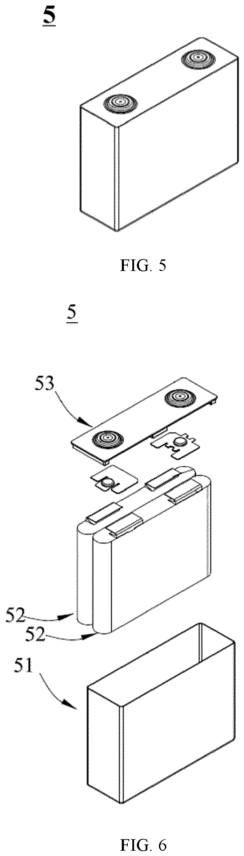

This application has no specific limitation on a shape of the secondary battery, and the secondary battery may be cylindrical, rectangular, or of any other shapes. FIG. 5 shows a rectangular secondary battery 5 as an example.

In some embodiments, referring to FIG. 6, the outer package may include a housing body 51 and a cover plate 53. The housing body 51 may include a base plate and a side plate connected onto the base plate, and the base plate and the side plate enclose an accommodating cavity. The housing body 51 has an opening communicating with the accommodating cavity, and the cover plate 53 is configured to cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and the quantity may be adjusted as required.

### Battery module and battery pack

The secondary battery of this application may be assembled into a battery module, and the battery module may include a plurality of secondary batteries. The specific quantity may be adjusted based on use and capacity of the battery module.

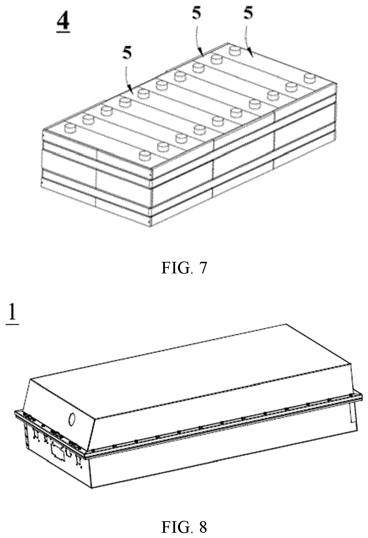

FIG. 7 is a schematic diagram of a battery module 4 as an example. As shown in FIG. 7, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened by fasteners.

Optionally, the battery module 4 may further include a housing with an accommodating space, and the plurality of secondary batteries 5 are accommodated in the accommodating space.

In some embodiments, the battery module may be further assembled into a battery pack, and a quantity of battery modules included in the battery pack may be adjusted based on use and capacity of the battery pack.

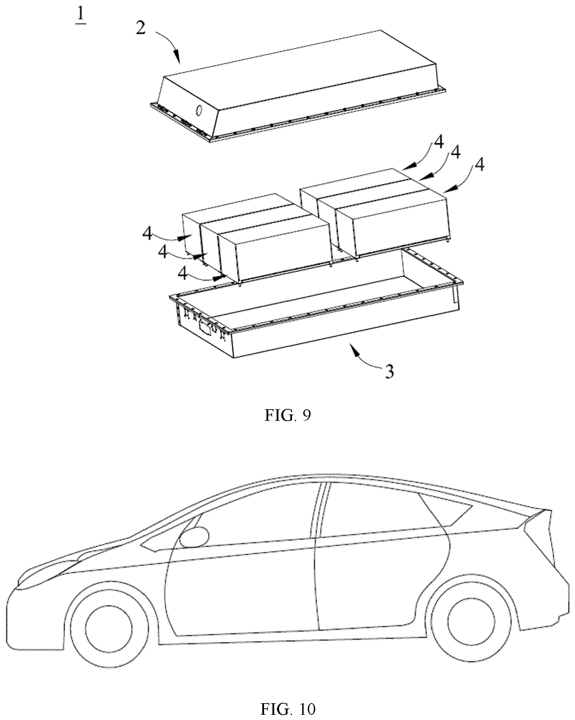

FIG. 8 and FIG. 9 are schematic diagrams of a battery pack 1 as an example. As shown in FIG. 8 and FIG. 9, the battery pack 1 may include a battery box and a plurality of battery modules 4 arranged in the battery box. The battery box includes an upper box body 2 and a lower box body 3. The upper box body 2 is configured to cover the lower box body 3 to form an enclosed space for accommodating the battery modules 4. The plurality of battery modules 4 may be arranged in the battery box in any manner.

### Electric apparatus

This application further provides an electric apparatus. The electric apparatus includes at least one of the secondary battery, the battery module, or the battery pack according to this application. The secondary battery, the battery module, or the battery pack may be used as a power source for the electric apparatus or an energy storage unit of the electric apparatus. The electric apparatus may be but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

FIG. 10 shows an electric apparatus as an example. The electric apparatus is a battery electric vehicle, a hybrid electric vehicle, a plug-in hybrid electric vehicle, or the like. To satisfy requirements of the apparatus for high power and high energy density, a battery pack or a battery module including the secondary battery of this application may be used.

In another example, the electric apparatus may be a mobile phone, a tablet computer, a notebook computer, or the like. Such electric apparatus is generally required to be light and thin and may use a secondary battery as its power source.

### Examples

Content disclosed in this application is described in detail in the following examples. These examples are only for illustrative purposes because various modifications and changes made without departing from the scope of the content disclosed in this application are apparent to persons skilled in the art. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

### Examples 1 to 12

### Preparation of positive electrode plate

A positive electrode active material lithium iron phosphate, a conductive agent acetylene black, and a binder PVDF were mixed at a mass ratio of 96:2:2. A solvent NMP was added. The resulting mixture was stirred by a vacuum stirrer to a uniform system, to obtain a positive electrode slurry.

The positive electrode slurry was uniformly applied onto a positive electrode collector aluminum foil, followed by drying, cold pressing, and cutting, to obtain a positive electrode plate.

### Preparation of negative electrode plate

A negative electrode active material, a conductive agent acetylene black, a thickener CMC, and a binder SBR were mixed at a mass ratio of 96.4:1:1.2:1.4. A solvent deionized water was added. The resulting mixture was stirred by a vacuum stirrer to a uniform system, to obtain a negative electrode slurry.

The negative electrode slurry was uniformly applied onto a negative electrode collector copper foil, followed by drying, cold pressing, and cutting, to obtain a negative electrode plate.

### Preparation of electrolyte

Ethylene carbonate (EC), ethyl methyl carbonate (EMC), and diethyl carbonate (DEC) were mixed at a volume ratio of 1:1:1 to obtain an organic solvent, and then a fully dried lithium salt LiPF₆ was dissolved in the organic solvent to prepare an electrolyte with a concentration of 1 mol/L.

### Preparation of separator

A polypropylene film was used as a separator.

### Preparation of secondary battery

The positive electrode plate, the separator, and the negative electrode plate were sequentially stacked so that the separator was located between the positive electrode plate and the negative electrode plate for separation. Then the resulting stack was processed to obtain a stacked electrode assembly. The stacked electrode assembly was placed into an outer package shell and dried. Then the electrolyte was injected, and processes such as vacuum sealing, standing, formation, and shaping were performed to obtain a secondary battery.

Before the electrolyte was injected, a lithium supplementing agent was applied onto a surface of a peripheral region of a second negative electrode film layer of the negative electrode plate, to form the second negative electrode film layer shown in FIG. 4 after injection of the electrolyte. In example 8, the lithium supplementing agent was discontinuously applied onto the peripheral region, to form a discontinuously distributed lithium source. In other examples, the lithium supplementing agent is continuously applied onto the peripheral region, to form a continuously distributed lithium source.

In examples 1 to 12, lithium supplementing d₀ = 100 mm, l₀ = 150 mm, and the negative electrode active material, the lithium supplementing agent, R₁/R, R₂/R₁, d₂, d₃, d₄, d₅, l₁, l₂, S₁/S₂, and C_{Li}/C₀ are shown in Table 1-1 respectively.

### Examples 13 to 18

The positive electrode plates, the negative electrode plates, the electrolytes, and the separators in examples 13 to 18 were prepared based on the preparation process in examples 1 to 12.

The positive electrode plate, the separator, and the negative electrode plate were sequentially stacked so that the separator was located between the positive electrode plate and the negative electrode plate for separation. Then the resulting stack was wound to obtain a wound electrode assembly. The wound electrode assembly was placed into an outer package shell and dried. Then the electrolyte was injected, and processes such as vacuum sealing, standing, formation, and shaping were performed to obtain a secondary battery.

Before the electrolyte was injected, a lithium supplementing agent was applied onto a surface of a peripheral region of a second negative electrode film layer (denoted as surface A) in a starting region and/or a peripheral region of a second negative electrode film layer (denoted as surface B) in an ending region, and after the electrolyte was injected, the second negative electrode film layer shown in FIG. 4 was formed on the surface A and/or the surface B.

### Examples 19 and 20

The positive electrode plates, the negative electrode plates, the electrolytes, the separators, and the secondary batteries in examples 19 and 20 were prepared based on the preparation process in examples 13 to 18.

A 20 µm thick polyethylene separator was applied onto a central region of the surface A in example 19, and a 20 µm thick polytetrafluoroethylene paint was applied onto a central region of the surface A in example 20.

In examples 13 to 20, d₀ of the surface A = 100 mm, l₀ of the surface A = 150 mm, d₀ of the surface B = 100 mm, and l₀ of the surface B = 165 mm. R₁/R, R₂/R₁, d₂, d₃, d₄, d₅, l₁, l₂, S₁/S₂, and C_{Li}/C₀ of the surface A and R₁/R, R₂/R₁, d₂, d₃, d₄, d₅, l₁, l₂, S₁/S₂, and C_{Li}/C₀ of the surface B are shown in Table 1 respectively.

In examples 13 to 20, based on a total capacity of a lithium source, a capacity percentage C_{A} of the lithium source stored on the surface A, a capacity percentage C_{B} of the lithium source stored on the surface B, the negative electrode active material, the lithium supplementing agent, and d₇ are shown in Table 1-2 respectively.

### Comparative examples 1 and 2

The positive electrode plates, the negative electrode plates, the electrolytes, the separators, and the secondary batteries in comparative examples 1 and 2 were prepared based on the preparation process in examples 1 to 12 with reference to Table 1-1, where no lithium supplementing agent was applied onto surfaces of peripheral regions of the second negative electrode film layers in comparative examples 1 and 2.

### Comparative examples 3 and 4

The positive electrode plates, the negative electrode plates, the electrolytes, the separators, and the secondary batteries in comparative examples 3 and 4 were prepared based on the preparation process in examples 13 to 18 with reference to Table 1-2, where no lithium supplementing agent was applied onto surfaces of peripheral regions of the second negative electrode film layers in comparative examples 3 and 4.

**Table 1-1**

| No. | Negative electrode active material | Lithium supplemen ting agent | R₁/R | R₂/ZR₁ | d₂ | d₃ | d₄ | d₅ | l₁ | l₂ | S₁/S₂ | C_{Li}/ C₀ |
|---|---|---|---|---|---|---|---|---|---|---|---|---|
| Example 1 | Artificial graphite | Lithium foil | 0.257 | 0.707 | 1 mm | 1 mm | 1 mm | 1.03 mm | 148 mm | 98 mm | 50.0 % | 90 % |
| Example 2 | | | 0.387 | 0.469 | 1 mm | 1 mm | 4 mm | 3.17 mm | 148 mm | 98 mm | 78.0 % | 90 % |
| Example 3 | | | 0.632 | 0.287 | 1 mm | 1 mm | 13.8 4 mm | 10 mm | 148 mm | 98 mm | 91.7 % | 90 % |
| Example 4 | | | 0.9434 | 0.192 | 1 mm | 1 mm | 33 mm | 48.22 mm | 148 mm | 98 mm | 96.3 % | 90 % |
| Example 5 | | | 0.9434 | 0.287 | 2.25 mm | 2.25 mm | 31 mm | 48.1 mm | 145.5 mm | 95.5 mm | 91.7 % | 90 % |
| Example 6 | | | 0.9434 | 0.721 | 16 mm | 16 mm | 25 mm | 13.2 mm | 118 mm | 68 mm | 47.7 % | 90 % |
| Example 7 | | | 0.632 | 0 | 0 | 0 | 15 mm | 10.7 mm | 150 mm | 100 mm | 100% | 90 % |
| Example 8 | | | 0.632 | 0.553 | 1 mm | 1 mm | 27.0 0 | 18 mm | / | / | 66.6 % | 90 % |
| Example 9 | | | 0.9434 | 0.192 | 1 mm | 1 mm | 33 mm | 48.22 mm | 148 mm | 98 mm | 96.7 % | 20 % |
| Example 10 | | | 0.632 | 0.553 | 4 mm | 3.25 mm | 10 mm | 8.84 mm | 142 mm | 92.7 mm | 69.4 % | 120 % |
| Example 11 | 85% artificial graphite + 15% silicon monoxid e | | 0.632 | 0.287 | 1 mm | 1 mm | 13.8 4 mm | 10 mm | 148 mm | 98 mm | 91.7 % | 90 % |
| Example 12 | Artificial graphite | Aluminum -lithium alloy | 0.632 | 0.287 | 1 mm | 1 mm | 13.8 4 mm | 10 mm | 148 mm | 98 mm | 91.7 % | 90 % |
| Compara tive example 1 | Artificial graphite | / | / | / | / | / | / | / | / | / | / | / |
| Compara tive example 2 | 85% artificial graphite + 15% silicon monoxid e | / | / | / | / | / | / | / | / | / | / | / |

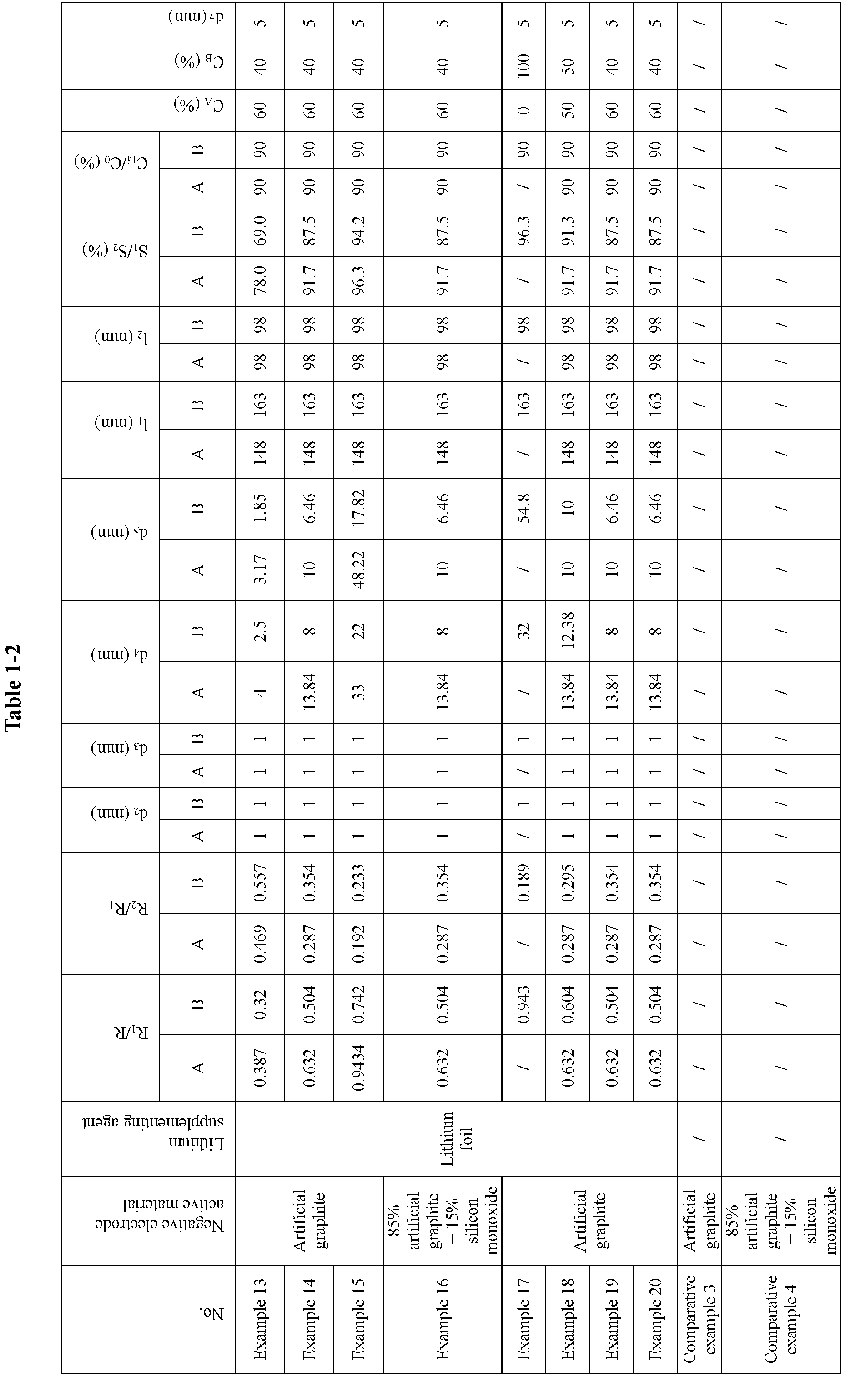

### Tests

### (1) First-cycle coulombic efficiency test for secondary battery

A capacity measured after the secondary battery was charged at 0.02C for 10 h at 45°C was recorded as C0. Then the secondary battery was charged to 3.65 V at 0.33C at 25°C, and a capacity measured after the secondary battery was charged to 0.05C at a constant voltage of 3.65 V was recorded as C1. Ultimately, a capacity measured after the secondary battery was discharged to 2.5 V at 0.33C was recorded as D0. First-cycle coulombic efficiency of secondary battery = D0/(C0 + C1) × 100%.

### (2) Storage performance test for secondary battery

The following steps were performed in an environment of 25°C.

The secondary battery was left standing for 5 minutes, discharged to 2.5 V at 0.33D0, left standing for 5 minutes, charged to 3.65 V at 0.33D0, charged to 0.05D0 at a constant voltage of 3.65 V, left standing for 5 minutes, and discharged to 2.5 V at 0.33D0. A capacity at that point was recorded as C_{dn}, n representing storage days. Then the secondary battery was left standing for 5 minutes, charged to 3.65 V at 0.33D0, charged to 0.05D0 (a fully charged state) at a constant voltage of 3.65 V, and then transferred to an environment of 45°C for storage.

Data was collected every 30 days of storage in the environment of 25°C according to the foregoing steps, and the final data was collected after 180 days of storage. Reversible capacity retention rate of secondary battery = C_{d180}/C_{d0} * 100%.

### 3. Cycling performance test for secondary battery

The following steps were performed in an environment of 25°C.

The secondary battery was left standing for 5 minutes, discharged to 2.5 V at 0.33D0, left standing for 5 minutes, charged to 3.65 V at 0.33D0, charged to 0.05C at a constant voltage of 3.65 V, left standing for 5 minutes, and discharged to 2.5 V at 0.33C. A capacity at that point was recorded as C'0.

After left standing for 5 minutes, the secondary battery was transferred to an environment of 45°C and subjected to charge and discharge cycles according to the following steps: The secondary battery was left standing for 20 minutes, charged to 3.65 V at 1D0, charged to 0.05D0 at a constant voltage of 3.65 V, left standing for 5 minutes, discharged to 2.5 V at 1D0, and left standing for 5 minutes. A discharge capacity Cₘ of each cycle was recorded, m representing the number of cycles. Charge and discharge cycles were performed until Cₘ/C'0 * 100 = 80%, and a value of m at that point was recorded as cycle life of the secondary battery.

Test results of examples 1 to 20 and comparative examples 1 to 4 are shown in Table 2.

**Table 2-1**

| No. | First-cycle coulombic efficiency | Reversible capacity retention rate | Cycle life (cycles) |
|---|---|---|---|
| Example 1 | 91.40% | 89.60% | 1659 |
| Example 2 | 91.50% | 89.90% | 1690 |
| Example 3 | 92.00% | 91.10% | 1860 |
| Example 4 | 92.00% | 91.10% | 1817 |
| Example 5 | 91.80% | 90.70% | 1789 |
| Example 6 | 91.70% | 90.50% | 1768 |
| Example 7 | 92.10% | 91.00% | 1866 |
| Example 8 | 91.60% | 89.90% | 1692 |
| Example 9 | 91.50% | 89.80% | 1689 |
| Example 10 | 92.00% | 90.50% | 1798 |
| Example 12 | 91.70% | 89.90% | 1728 |
| Comparative example 1 | 91.10% | 88.90% | 1580 |

**Table 2-2**

| No. | First-cycle coulombic efficiency | Reversible capacity retention rate | Cycle life (cycles) |
|---|---|---|---|
| Example 11 | 88.30% | 87.10% | 755 |
| Comparative example 2 | 87.20% | 85.20% | 629 |

**Table 2-3**

| No. | First-cycle coulombic efficiency | Reversible capacity retention rate | Cycle life (cycles) |
|---|---|---|---|
| Example 13 | 91.50% | 90.40% | 2151 |
| Example 14 | 92.10% | 91.00% | 2314 |
| Example 15 | 92.00% | 90.90% | 2306 |
| Example 17 | 91.70% | 90.10% | 2153 |
| Example 18 | 92.00% | 90.60% | 2274 |
| Example 19 | 92.10% | 91.30% | 2418 |
| Example 20 | 92.00% | 91.10% | 2369 |
| Comparative example 3 | 91.20% | 89.10% | 2012 |

**Table 2-4**

| No. | First-cycle coulombic efficiency | Reversible capacity retention rate | Cycle life (cycles) |
|---|---|---|---|
| Example 16 | 88.40% | 86.80% | 851 |
| Comparative example 4 | 87.30% | 84.70% | 709 |

It can be seen from Tables 1 and 2 that the lithium source being provided in the peripheral region of the second negative electrode film layer of the negative electrode plate can significantly improve the first-cycle coulombic efficiency of the secondary battery and allow the secondary battery to maintain a high reversible capacity retention rate and long cycle life.

Specifically, it can be seen from Tables 1-1, 2-1, and 2-2 that as compared with comparative examples 1 and 2, in examples 1 to 12, the lithium source is provided in the peripheral region of the second negative electrode film layer of the secondary battery having the stacked structure, the first-cycle coulombic efficiency of the secondary battery can be improved by more than 0.3%, the reversible capacity retention rate can be improved by more than 0.7%, and the cycle life can be prolonged by more than 79 cycles. It can be seen that the lithium source being provided in the peripheral region of the second negative electrode film layer can implement efficient lithium supplementing of the secondary battery, thereby effectively improving the first-cycle coulombic efficiency and long-term cycling performance of the secondary battery. It can be seen from examples 1 to 7 that the lithium source is provided in the peripheral region of the second negative electrode film layer, the lithium source has an appropriate area, and an appropriate distance is kept between the lithium source and the edge of the second negative electrode film layer, so that the lithium supplementing efficiency and the utilization of the lithium source can be improved. It can be seen from example 8 that compared with the discontinuously distributed lithium source, the continuously distributed lithium source can have higher lithium supplementing efficiency and utilization of the lithium source. It can be seen from examples 9 and 10 that both the lithium source being stored in the peripheral region of the second negative electrode film layer and C_{Li}/C₀ being within a range of 20% to 120% can effectively improve the first-cycle coulombic efficiency and long-term cycling performance of the secondary battery, and especially when C_{Li}/C₀ is within a range of 90% to 120%, the first-cycle coulombic efficiency and long-term cycling performance of the secondary battery are more significantly improved. It can be seen from example 12 that a lithium source formed from a lithium alloy can also have high lithium supplementing efficiency, but from a relative perspective, a lithium source formed by lithium metal has a greater advantage in lithium supplementing.

It can be seen from Tables 1-2, 2-3, and 2-4 that as compared with comparative examples 3 and 4, in examples 13 to 20, the lithium source is provided in the peripheral region of the second negative electrode film layer of the secondary battery having the wound structure, the first-cycle coulombic efficiency of the secondary battery can be improved by more than 0.3%, the reversible capacity retention rate can be improved by more than 1%, and the cycle life can be prolonged by more than 139 cycles. It can be seen that the lithium source being provided in the peripheral region of the second negative electrode film layer can implement efficient lithium supplementing of the secondary battery, thereby effectively improving the first-cycle coulombic efficiency and long-term cycling performance of the secondary battery. It can be seen from examples 13 to 15 that the lithium source is provided in the peripheral region of the second negative electrode film layer, the lithium source has an appropriate area, and an appropriate distance is kept between the lithium source and the edge of the second negative electrode film layer, so that the lithium supplementing efficiency and the utilization of the lithium source can be improved. It can be seen from examples 17 and 18 that when the secondary battery has the wound structure, compared with the lithium source provided in the ending region of winding, the lithium source provided in the starting region of winding can have higher lithium supplementing efficiency. In addition, it can be seen from examples 19 and 20 that the barrier layer being provided in the central region of the second negative electrode film layer can effectively reduce electrolyte infiltration into the negative electrode film layer in the central region, thereby improving the first-cycle coulombic efficiency, reversible capacity retention rate, and cycle life of the secondary battery.

The foregoing descriptions are merely specific embodiments of this application, but are not intended to limit the protection scope of this application. Any equivalent modifications or replacements readily figured out by persons skilled in the art within the technical scope disclosed in this application shall fall within the protection scope of this application. Therefore, the protection scope of this application shall be subject to the protection scope of the claims.

## Claims

1. A secondary battery, comprising:
a positive electrode plate comprising a positive electrode film layer;
a separator; and
a negative electrode plate comprising:
a first negative electrode film layer, the first negative electrode film layer being provided opposite the positive electrode film layer with the separator therebetween, and
a second negative electrode film layer, the second negative electrode film layer comprising a negative electrode film layer not provided opposite the positive electrode film layer, and the second negative electrode film layer comprising a central region and a peripheral region surrounding the central region, wherein a lithium source used for supplementing lithium to the first negative electrode film layer is stored in at least a portion of the peripheral region of the second negative electrode film layer.

2. The secondary battery according to claim 1, wherein an equivalent circular area diameter R of the second negative electrode film layer and an equivalent circular area diameter R₁ of the peripheral region satisfy 0.257R ≤ R₁ ≤ 0.9434R.

3. The secondary battery according to claim 1 or 2, wherein the peripheral region has a first portion and a second portion surrounding the first portion, an equivalent circular area diameter R₂ of the second portion satisfying 0 < R₂ < R₁, optionally 0 < R₂ < 0.5R₁, and more optionally 0 < R₂< 0.1R₁,
wherein the lithium source is stored in the first portion.

4. The secondary battery according to claim 3, wherein the first portion is annular, and a minimum distance d₁ between an outer contour line of the first portion and an edge of the second negative electrode film layer and width d₀ of the second negative electrode film layer satisfy 0 < d₁ ≤ d₀/6.

5. The secondary battery according to claim 4, satisfying d₃ ≤ d₂ <_ d₀/6, wherein d₂ represents a minimum distance between the outer contour line and sides of the second negative electrode film layer in its length direction, and d₃ represents a minimum distance between the outer contour line and sides of the second negative electrode film layer in its width direction.

6. The secondary battery according to claim 4 or 5, wherein the first portion is a hollow rectangle, and the first portion satisfies:
0 < d₄ ≤ d₀/3, d₄ representing width of the first portion in the width direction of the second negative electrode film layer; and/or
0 < d₅ ≤ l₀/3, d₅ representing width of the first portion in the length direction of the second negative electrode film layer, and l₀ representing length of the second negative electrode film layer.

7. The secondary battery according to claim 5 or 6, wherein the secondary battery satisfies at least one of the following:
(1) 1 mm ≤ d₂ <_ 5 mm;
(2) (l₀ - 10 mm) ≤ 11 ≤ (l₀ - 2 mm), l₁ representing length of the outer contour line;
(3) 10 mm ≤ d₄ ≤ 5 mm;
(4) 1 mm ≤ d₃ ≤ 5 mm;
(5) (d₀ - 10 mm) ≤ l₂ ≤ (d₀ - 2 mm), l₂ representing width of the outer contour line;
(6) 10 mm ≤ d₅ <_ d₄; and
(7) the lithium source is annularly distributed on the first portion.

8. The secondary battery according to any one of claims 1 to 7, wherein an area S₁ of the second negative electrode film layer with the lithium source stored and an area S₂ of the peripheral region satisfy 10% ≤ S₁/S₂ ≤ 100%, optionally 80% ≤ S₁/S₂ <100%, and more optionally 90% ≤ S₁/S₂ < 100%.

9. The secondary battery according to any one of claims 1 to 8, wherein the lithium source comprises at least one of lithium metal, a lithium alloy, a composite of lithium metal and a negative electrode active material, and a composite of an aluminum alloy and a negative electrode active material; wherein optionally, the lithium alloy comprises at least one of a silicon-lithium alloy, an aluminum-lithium alloy, a magnesium-lithium alloy, and a tin-lithium alloy.

10. The secondary battery according to any one of claims 1 to 9, wherein the secondary battery satisfies 20%C₀ <_ C_{Li} <_ 120%C₀, and optionally 90%C₀ <_ C_{Li} ≤ 120%C₀, wherein C₀ represents active substance capacity per unit area of the second negative electrode film layer, and C_{Li} represents capacity per unit area of the lithium source.

11. The secondary battery according to any one of claims 1 to 10, wherein the secondary battery has a winding structure, the second negative electrode film layer comprises a starting region and an ending region in a winding direction, and the secondary battery satisfies C_{A} ≥ C_{B}, C_{A} representing capacity of the lithium source in the starting region, and C_{B} representing capacity of the lithium source in the ending region.

12. The secondary battery according to claim 11, wherein a minimum distance d₇ between the lithium source and the first negative electrode film layer satisfies 0 < d₇ ≤ 10 mm.

13. The secondary battery according to any one of claims 1 to 12, wherein a surface of the central region is covered with a barrier layer, the barrier layer comprising a barrier film and/or a barrier coating, wherein
the barrier film is selected from at least one of a casting polypropylene film, a uniaxially oriented polypropylene film, a biaxially oriented polypropylene film, a polyethylene film, a polyester fiber film, and a polyvinyl chloride film;
the barrier coating comprises at least one of polyvinylidene fluoride, polytetrafluoroethylene, polyphenylacrylamide, polyamide, polyimide, polymethylmethacrylate, polyurethane, polystyrene, polyacrylic acid, polyacrylamide, polyacrylonitrile, or a copolymer of the foregoing substances; and
optionally, thickness of the barrier layer is 6 µm-40 µm, and more optionally, the thickness of the barrier layer is 10 µm-20 µm.

14. A battery module, comprising the secondary battery according to any one of claims 1 to 13.

15. A battery pack, comprising the battery module according to claim 14.

16. An electric apparatus, comprising at least one of the secondary battery according to any one of claims 1 to 13, the battery module according to claim 14, or the battery pack according to claim 15.
